# EUROPÄISCHE PATENTSCHRIFT

(11) **EP 2 203 342 B1**
(45) Veröffentlichungstag und Bekanntmachung des Hinweises auf die Patenterteilung: **24.08.2011**
(21) Anmeldenummer: 08841940.3
(22) Anmeldetag: 09.10.2008
(51) Int. Cl.: B62D 25/06

(54) **KRAFTFAHRZEUG MIT EINEM DACHSPRIEGEL**
MOTOR VEHICLE COMPRISING A ROOF BOW
VÉHICULE AUTOMOBILE ÉQUIPÉ D'UN ARCEAU DE TOIT

(30) Priorität: 24.10.2007 DE 102007050831
(43) Veröffentlichungstag der Anmeldung: 07.07.2010
(73) Patentinhaber: Bayerische Motoren Werke Aktiengesellschaft, 80809 München (DE)
(72) Erfinder: HOGGER, Thomas, 81541 München (DE)
(86) Internationale Anmeldenummer: PCT/EP2008/008516
(87) Internationale Veröffentlichungsnummer: WO 2009/052951

(56) Entgegenhaltungen:
- EP-A- 1 690 780
- DE-A1-102004 054 159
- US-A- 4 089 558

## Beschreibung

Die Erfindung betrifft ein Kraftfahrzeug mit einem Dachspriegel nach dem Oberbegriff des Patentanspruchs 1.

Aus der US 4,089,558 ist ein derartiges Kraftfahrzeug bekannt, mit einem Dachspriegel, der in Fahrzeugquerrichtung verläuft. Der Dachspriegel verläuft dabei vollkommen gerade zwischen den beiden Dachseitenholmen.

Ferner ist aus der EP 1 690 780 A2 eine komplexe Verstärkungsstruktur für eine Dachhaut bekannt, die diese gitternetzförmig unterstützt. Diese Verstärkungsstruktur folgt 1 : 1 der Wölbung der Dachhaut. Die der Dachhaut zugewandte Seite der Verstärkungsstruktur verläuft stets parallel zur Dachhaut.

Darüber hinaus ist aus der DE 10 2004 029 737 A1 ein Dachspriegel für ein Kraftfahrzeug bekannt, der in einem Rollumformverfahren hergestellt wurde. Der Dachspriegel kann mittels eines Wölbewerkzeugs gewölbt werden. Die dabei verliehene Wölbung entspricht der Wölbung, die der auf dem Dachspriegel liegende Dachhautabschnitt aufweist. Der Dachspriegel kann zudem Klebesicken zum Verkleben der Dachhaut mit dem Dachspriegel aufweisen.

Aufgabe der Erfindung ist es, ein Kraftfahrzeug mit einem Dachspriegel zu schaffen, der besonders kostengünstig herstellbar ist.

Diese Aufgabe wird mit einem Kraftfahrzeug mit einem Dachspriegel mit den Merkmalen des Patentanspruchs 1 gelöst.

Erfindungsgemäß weist der Dachspriegel in Fahrzeugquerrichtung eine konstante Wölbung auf. Die Dachhaut dagegen, die darauf verklebt ist, weist keine konstante Wölbung in Fahrzeugquerrichtung auf. Vielmehr ist die Wölbung der Dachhaut typischer Weise in der Mitte sehr gering und nimmt zu den seitlichen Randbereichen zu. Um nun dennoch einen konstanten Abstand zwischen dem Dachspriegel und der Dachhaut für den Unterfütterungskleber zu haben, verläuft eine der Dachhaut des Kraftfahrzeugs zugewandte Seite des Dachspriegels in Fahrzeuglängsrichtung gesehen relativ zu dem Dachhautabschnitt in einem spitzen Winkel. Dadurch variiert der Abstand zwischen dem Dachspriegel und der Dachhaut in Fahrzeuglängsrichtung. Beispielsweise kann die der Dachhaut zugewandte Seite des Dachspriegels in Fahrzeuglängsrichtung gesehen nach vorne hin leicht gegenüber der Dachhaut abfallen. Dadurch ist der Abstand zwischen der Dachhaut und dem Dachspriegel vorne stets größer als hinten. Auf diese Weise kann der sich in Fahrzeugquerrichtung aufgrund der unterschiedlichen Wölbung verändernde Abstand zwischen der Dachhaut und dem Dachspriegel ausgeglichen werden, indem die Kleberaupe mal weiter vorne und mal weiter hinten auf die schräg verlaufende Seite des Dachspriegels aufgetragen wird.

Bevorzugt ist der Dachspriegel rollgeformt. Rollformen oder Walzprofilieren ist ein kontinuierliches Biegeverfahren, bei dem Bandmaterial aus Blech von einer Anzahl von Walzpaaren schrittweise zum gewünschten Endquerschnitt umgeformt wird. Es ist ein besonders kostengünstiges Fertigungsverfahren, wenn größere Mengen hergestellt werden sollen. Daher ist es für den Kraftfahrzeugbau besonders geeignet. Günstigerweise wird der Dachspriegel beim Rollformen mit der Wölbung versehen. Dadurch ist anschließend kein separater Biegevorgang erforderlich. Dies senkt die Herstellkosten des Dachspriegels.

Vorteilhafterweise ist der Dachspriegel aus einem höchstfesten Stahl hergestellt. Höchstfesten Stahlsorten können Streckgrenzen von 800 MPa und mehr aufweisen. Dadurch kann der Dachspriegel höchste Steifigkeitsanforderungen bei relativ dünnen Wandstärken aufweisen, sodass das Gewicht des Dachspriegels bezogen auf seine Steifigkeit außerordentlich gering ist. Gegenüber herkömmlichen Dachspriegeln trägt der Dachspriegel aus einem höchstfesten Stahl bei gleicher Steifigkeit somit zur Gewichtsreduzierung des Kraftfahrzeugs bei. Auch kann der Schwerpunkt des Kraftfahrzeugs niedrig gehalten werden. Solche höchstfesten Stahlsorten weisen eine sehr geringe Umformbarkeit auf, sodass sich der Dachspriegel in einem Tiefziehverfahren gar nicht herstellen ließe, weil die Streckgrenze dabei überschritten werden würde. Ein Rollumformen einer Platine aus einem höchstfesten Stahl zum gewünschten Dachspriegel ist dagegen möglich.

Alternativ kann der Dachspriegel aus einem Strangpressprofil, beispielsweise aus Aluminium, bestehen. Strangpressen ist eine kostengünstige Methode zur Herstellung des Dachspriegels, da die Werkzeugkosten gering sind.

Zur Verbesserung der Steifigkeit kann der Dachspriegel unabhängig vom Herstellungsverfahren und von der Materialwahl ein oder mehrere Hohlprofile aufweisen. Die Hohlprofile erhöhen aufgrund des geschlossenen Querschnitts die Steifigkeit des Dachspriegels deutlich.

In der Zeichnung ist ein Ausführungsbeispiel der Erfindung dargestellt, anhand dessen die Erfindung im Folgenden näher beschrieben wird. Die einzelnen Figuren zeigen in schematischer Darstellungsweise:
- Fig. 1: einen Schnitt durch einen Dachspriegel eines Kraftfahrzeugs, der mit einer Dachhaut verklebt ist, in der Fahrzeugmitte und
- Fig. 2: einen Schnitt durch den Dachspriegel aus Fig. 1 im seitlichen Bereich der Dachhaut.

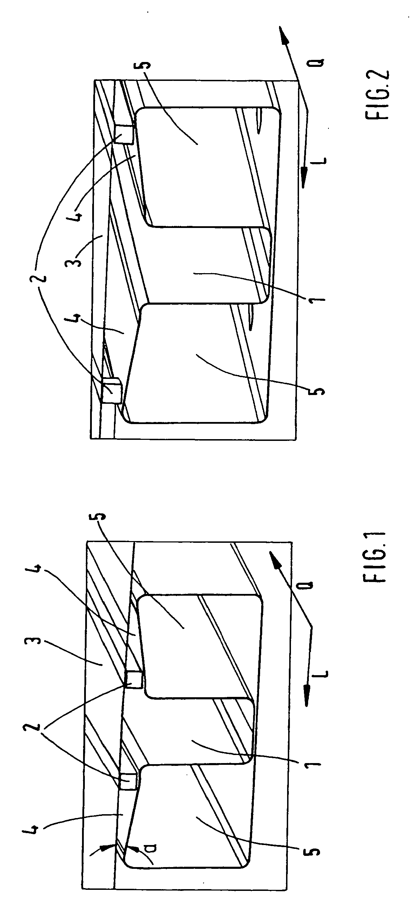

In Fig. 1 und Fig. 2 ist ein in Fahrzeugquerrichtung Q verlaufender Dachspriegel 1 eines Personenkraftfahrzeugs dargestellt, der mit zwei Kleberaupen 2 eines Unterfütterungsklebers mit einer Dachhaut 3 des Personenkraftfahrzeugs verklebt ist. Der Dachspriegel 1 wurde aus einer Platine aus höchstfestern Stahl mit einer Streckgrenze von 1.000 MPa rollgeformt. Beim Rollformen wurde der Dachspriegel 1 zugleich gebogen, sodass er in Fahrzeugquerrichtung Q eine konstante Wölbung aufweist. Die Dachhaut 3, mit der der Dachspriegel 1 verklebt ist, weist in Fahrzeugquerrichtung Q aber keine konstante Wölbung auf. Die Wölbung der Dachhaut 3 ist in der Fahrzeugmitte flach und nimmt zu den Seiten hin deutlich zu. Dadurch verändert sich der Abstand zwischen der Dachhaut 3 und dem Dachspriegel 1 in Fahrzeugquerrichtung Q. Eine prozesssichere Verklebung über die gesamte Breite des Fahrzeugs zwischen dem Dachspriegel 1 und der Dachhaut 3 setzt allerdings einen annähernd konstanten Abstand zwischen den beiden Bauteilen voraus.

Deshalb weist der Dachspriegel 1 zwei der Dachhaut 3 zugewandte Seiten 4 auf, die in Fahrzeuglängsrichtung L gesehen jeweils in einem spitzen Winkel α zur Dachhaut 3 verlaufen. Die beiden Seiten 4 fallen in Fahrzeuglängsrichtung L gesehen jeweils zur Mitte des Dachspriegels 1 hin ab. Dadurch ist die der Abstand der Seiten 4 des Dachspriegels 1 zur Dachhaut 3 im mittleren Bereich in Fahrzeuglängsrichtung L gesehen jeweils größer als an den äußeren Randbereichen der Seiten 4.

Wie in Fig. 1 erkennbar ist in der Fahrzeugmitte der Abstand zwischen dem Dachspriegel 1 und der Dachhaut 3 gering, weil die Wölbung des Dachspriegels 1 in diesem Bereich größer als die Wölbung der Dachhaut 3 ist. Zu den Fahrzeugseiten hin nimmt wie in Fig. 2 erkennbar der Abstand zwischen dem Dachspriegel 1 und der Dachhaut 3 zu bis zu dem äußersten seitlichen Rand der Dachhaut 3, wo diese eine sehr starke Wölbung aufweist, sodass sie sich wieder dem Dachspriegel 1 nähert.

Entsprechend ist die Kleberaupe 2 in den Bereichen mit einem kleinen Abstand zwischen dem Dachspriegel 1 und der Dachhaut 3-wie in Fig. 1 gezeigt - möglichst mittig in Fahrzeuglängsrichtung L gesehen auf den der Dachhaut 3 zugewandten Seiten 4 des Dachspriegels 1 aufgetragen, wo der Abstand zwischen den Seiten 4 und der Dachhaut 1 in Fahrzeuglängsrichtung L gesehen am größten ist. Dagegen ist die Kleberaupe 2 in den Bereichen mit einem großen Abstand zwischen dem Dachspriegel 1 und der Dachhaut 3 - wie in Fig. 2 gezeigt - relativ weit an den äußeren Randbereichen der Seiten 4 in Fahrzeuglängsrichtung L gesehen aufgetragen. Auf diese Weise kann der Abstand zwischen dem Dachspriegel 1 und der Dachhaut 3 für die Verklebung konstant gehalten werden, sodass eine prozesssichere Verklebung möglich ist.

Der Abstand zwischen der Dachhaut 3 und dem Dachspriegel 1 variiert zwar, er weist aber keine Sprünge auf. Entsprechend der Veränderung des Abstands wird die Kleberaupe 2 in Fahrzeugquerrichtung Q kontinuierlich auf den Seiten 4 mal etwas weiter zur Mitte in Fahrzeuglängsrichtung L gesehen des Dachspriegels 1 aufgetragen und mal etwas mehr zu den äußeren Randbereichen der Seiten 4 hin.

Der Dachspriegel 1 weist zwei Hohlprofile 5 auf, die, wie die gesamte geometrische Gestaltung, beim Rollumformen erzeugt wurden. Diese beiden Hohlprofile 5 weisen jeweils einen praktisch geschlossenen Querschnitt auf, sodass der Dachspriegel 1 aufgrund der Hohlprofile 5 eine hohe Steifigkeit aufweist.

## Patentansprüche

1. Kraftfahrzeug mit einem in Fahrzeugquerrichtung (Q) verlaufenden Dachspriegel (1) und einer Dachhaut (3), **dadurch gekennzeichnet, dass** der Dachspriegel (1) in Fahrzeugquerrichtung (Q) eine konstante Wölbung aufweist, dass die Dachhaut (3), mit der der Dachspriegel (1) verklebt ist, in Fahrzeugquerrichtung (Q) keine konstante Wölbung aufweist, und dass eine der Dachhaut (3) des Kraftfahrzeugs zugewandte Seite (4) des Dachspriegels (1) in Fahrzeuglängsrichtung (L) gesehen relativ zu dem Abschnitt der Dachhaut (3); mit dem der Dachspriegel (1) verklebt ist, in einem spitzen Winkel (α) verläuft.

2. Kraftfahrzeug nach Anspruch 1, **dadurch gekennzeichnet, dass** der Dachspriegel (1) rollgeformt ist.

3. Kraftfahrzeug nach Anspruch 2, **dadurch gekennzeichnet, dass** der Dachspriegel (1) beim Rollformen mit der Wölbung versehen wird.

4. Kraftfahrzeug nach einem der vorhergehenden Ansprüche, **dadurch gekennzeichnet, dass** der Dachspriegel (1) aus einem höchstfesten Stahl hergestellt ist.

5. Kraftfahrzeug nach Anspruch 1, **dadurch gekennzeichnet, dass** der Dachspriegel (1) aus einem Strangpressprofil besteht.

6. Kraftfahrzeug nach einem der vorhergehenden Ansprüche, **dadurch gekennzeichnet, dass** der Dachspriegel (1) ein oder mehrere Hohlprofile (5) aufweist.

## Claims

1. A motor vehicle with a roof covering (3) and a roof arch (1) extending in the transverse direction (Q) of the vehicle, **characterised in that** the roof arch (1) has a constant curvature in the transverse direction (Q) of the vehicle, the roof covering (3) is stuck to the roof arch (1) and does not have a constant curvature in the transverse direction (Q) of the vehicle, and a side (4) of the roof arch (1) facing the roof covering (3) of the vehicle, when considered in the longitudinal direction (L) of the vehicle, is at an acute angle (α) to the portion of the roof covering (3) stuck to the roof arch (1).

2. A vehicle according to claim 1, **characterised in that** the roof arch (1) is shaped by roll-forming.

3. A vehicle according to claim 2, **characterised in that** the roof arch (1) is given its curvature by roll-forming.

4. A vehicle according to any of the preceding claims, **characterised in that** the roof arch (1) is made of super high-strength steel.

5. A vehicle according to claim 1, **characterised in that** the roof arch (1) is in the form of an extruded profile.

6. A vehicle according to any of the preceding claims, **characterised in that** the roof arch (1) comprises one or more hollow profiles (5).

## Revendications

1. Véhicule automobile équipé d'un arceau de toit (1) dirigé dans la direction transversale (Q) du véhicule ainsi qu'une peau (3),
**caractérisé en ce que**
- l'arceau (1) présente une courbure constante dans la direction transversale (Q) du véhicule,
- la peau (3) est collée à l'arceau (1), et n'a pas de courbure constante dans la direction transversale (Q) du véhicule, et
- le côté (4) de l'arceau de toit (1) tourné vers la peau (3) du toit du véhicule fait un angle aigu (α), vu dans la direction longitudinale (L) du véhicule, avec le segment de la peau (3), collé à l'arceau (1).

2. Véhicule automobile selon la revendication 1,
**caractérisé en ce que**
l'arceau de toit (1) est formé par roulage.

3. Véhicule automobile selon la revendication 2,
**caractérisé en ce que**
l'arceau de toit (1) est cintré au moment de son roulage.

4. Véhicule automobile selon l'une des revendications précédentes,
**caractérisé en ce que**
l'arceau de toit (1) est fabriqué en un acier très résistant.

5. Véhicule automobile selon la revendication 1,
**caractérisé en ce que**
l'arceau de toit (1) est un profilé étiré à la presse.

6. Véhicule automobile selon l'une des revendications précédentes,
**caractérisé en ce que**
l'arceau de toit (1) comporte un ou plusieurs profilés (5).
